# FASCICULE DE BREVET EUROPEEN

(11) **EP 2 657 562 B1**
(45) Date de publication et mention de la délivrance du brevet: **04.03.2015**
(21) Numéro de dépôt: 13447008.7
(22) Date de dépôt: 22.04.2013
(51) Int. Cl.: F16F 3/087

(54) **Ressort de compression**
Druckfeder
Compression spring

(30) Priorité: 24.04.2012 BE 201200272
(43) Date de publication de la demande: 30.10.2013
(73) Titulaire: E-Vention, 1341 Ottignies-Louvain La neuve (BE)
(72) Inventeur: Mertens, Bernard, 1380 Lasne (BE); Mertens, Jean-Michel, 1300 Wavre (BE)

(56) Documents cités:
- WO-A1-2010/012049
- DE-C- 587 498
- DE-U- 6 604 167
- US-A- 4 211 429
- US-A- 5 529 327

## Description

### Domaine de l'invention

L'invention se rapporte aux ressorts, spécialement aux ressorts de compression en élastomère.

### Etat de la technique

Dans le document WO-2010/012049-A1 (Mertens, Rudi), on décrit un ressort de compression formé d'un assemblage composite de blocs en élastomère alternant avec des intercalaires métalliques dont la périphérie déborde les blocs en élastomère. Cette zone périphérique des intercalaires porte des proéminences qui font saillie autour des blocs et servent à limiter la compression de ceux-ci. L'assemblage composite des blocs élastiques et des intercalaires métalliques est généralement pris en sandwich entre deux supports d'extrémité qui présentent également des proéminences à leur périphérie pour limiter la compression des blocs élastiques qui les jouxtent. Dans le cas de ressort de grande longueur, comprenant un nombre élevé de blocs élastiques et d'intercalaires métalliques, ceux-ci sont traversés par un barreau cylindrique pour rigidifier l'assemblage latéralement et éviter ainsi un flambage de celui-ci en cours d'utilisation. Le barreau métallique est normalement solidarisé à un intercalaire médian de l'assemblage. Du fait qu'il doit supporter le barreau axial, cet intercalaire médian est généralement plus épais que les autres intercalaires.

### Résumé de l'invention

L'invention vise à perfectionner le ressort connu décrit plus haut, de manière à faciliter sa fabrication et à réduire son prix de revient.

En conséquence, l'invention concerne un ressort de compression comprenant un assemblage composite de blocs cylindriques en élastomère compressible élastiquement et d'intercalaires indéformables, qui sont pris en sandwich entre les blocs et débordent ceux-ci, lesdits intercalaires présentant, dans leur zone qui débordent les blocs, des proéminences qui limitent la compression des blocs. Selon l'invention, le ressort se caractérise en ce que les intercalaires comprennent des plateaux sensiblement plans, dont une seule face porte les proéminences précitées.

### Description détaillée de l'invention

Le ressort selon l'invention comprend des blocs en élastomère qui, par définition, est une matière macromoléculaire présentant des propriétés élastiques. L'élastomère doit être sélectionné parmi ceux qui présentent des propriétés élastiques à la compression. Des informations complémentaires concernant les blocs en élastomère sont communiquées plus loin.

Dans le ressort selon l'invention, les blocs en élastomère sont cylindriques. Ils sont généralement des cylindres droits.

Dans le ressort selon l'invention, les blocs en élastomère alternent avec des intercalaires auxquels ils sont liés pour former un assemblage composite cohérent. Les intercalaires sont indéformables. On entend, par cette définition, que si on comprime l'assemblage composite jusqu'au voisinage de la limite élastique de l'élastomère des blocs (sans excéder celle-ci), la déformation subie par les intercalaires est négligeable. Par la suite, à défaut d'une information contraire, le vocable « intercalaire » désignera un intercalaire indéformable tel que défini ci-dessus. Les intercalaires sont de préférence en métal, par exemple en acier, bien que toute autre matière adéquate (par exemple un polymère de synthèse) puisse convenir.

La liaison des blocs en élastomère aux intercalaires peut être obtenue par tout moyen adéquat. Ce moyen n'est pas critique pour la définition de l'invention et peut par exemple comprendre une liaison par collage, par sertissage ou au moyen de la technique décrite dans le document WO 2006/021357 (Bureau Mertens) (liste exemplative, non exhaustive).

Les intercalaires débordent les blocs en élastomère et ils présentent des proéminences dans leur zone qui déborde lesdits blocs. Ces proéminences ont pour fonction de limiter la contraction axiale des blocs en élastomère lorsque le ressort est soumis à une compression.

Selon l'invention, les intercalaires comprennent des plateaux sensiblement plans, dont une seule face porte les proéminences précitées.

Dans le ressort selon l'invention, la face des plateaux, qui ne porte pas de proéminences est plane.

Dans la suite du présent mémoire, la face des plateaux qui porte des proéminences sera désignée « face proéminente » et l'autre face (qui ne porte pas de proéminences) sera désignée « face plane ».

Dans sa forme de réalisation la plus élémentaire, le ressort selon l'invention comprend deux blocs en élastomère et un seul intercalaire pris en sandwich entre les deux blocs. Dans cette forme de réalisation, l'intercalaire comprend une paire de plateaux (tels que définis plus haut) qui sont accolés dos à dos sur leur face plane et portent les proéminences sur l'autre face. De la sorte, les proéminences d'un des plateaux entourent l'un des deux blocs en élastomère et les proéminences de l'autre plateau entourent l'autre bloc. L'assemblage des deux blocs et des deux plateaux accolés est pris en sandwich entre deux supports d'extrémité. La face des supports d'extrémité, qui fait face à un bloc en élastomère peut être essentiellement plane, ce qui simplifie sa fabrication.

Dans une autre forme de réalisation élémentaire du ressort selon l'invention, celui-ci comprend deux blocs en élastomères de part et d'autre d'une plaque médiane plane et l'assemblage ainsi constitué est pris en sandwich entre deux plateaux dont les faces dirigées vers la plaque médiane portent les proéminences précitées. La plaque médiane est indéformable et ne porte pas de proéminences. Elle est en métal ou en une autre matière adéquate.

Dans la majorité des applications industrielles, le ressort selon l'invention comprend plus de deux blocs élastomères et plus d'un intercalaire. En conséquence, dans une forme de réalisation générale, le ressort selon l'invention comprend au moins trois blocs en élastomère, alternant avec deux intercalaires. Dans cette forme de réalisation générale de l'invention, tout bloc intermédiaire est pris en sandwich entre la face proéminente d'un plateau intercalaire et la face plane d'un autre plateau intercalaire (les expressions « face proéminente » et « face plane » ayant été définies plus haut). Dans cette forme de réalisation de l'invention, le nombre optimum de blocs et d'intercalaires va dépendre des propriétés mécaniques recherchées pour le ressort, particulièrement de leur course. D'une manière générale, l'assemblage composite du ressort selon l'invention comprend n blocs en élastomère alternant avec (n-1) intercalaires, n désignant un nombre entier au moins égal à 2. La valeur maximum que n peut atteindre n'est pas critique pour la définition de l'invention. En pratique, elle dépend de considérations de stabilité et d'encombrement du ressort et doit être déterminée dans chaque cas particulier par un homme du métier en fonction notamment des dimensions des blocs et des intercalaires. A titre d'exemple non limitatif, on peut attribuer à n une valeur comprise entre 2 et 50 (par exemple de 3 à 25), les valeurs de 4 à 15 convenant bien dans la plupart des applications (valeurs exemplatives, non exhaustives). On recommande que n soit au moins égal (de préférence supérieur) à 4.

Dans le ressort selon l'invention, l'assemblage composite des blocs et des intercalaires est habituellement pris en sandwich entre deux supports d'extrémité. Ces supports ont pour fonction de transmettre les efforts de compression à l'assemblage composite. Ils sont normalement indéformables et sont généralement réalisés en métal, bien qu'une autre matière rigide puisse également convenir. Dans une variante avantageuse de cette forme de réalisation de l'invention, un des intercalaires comprend une paire de plateaux, qui sont accolés sur leurs faces planes respectives. Dans cette variante de l'invention, les deux supports d'extrémités peuvent être plans et identiques, ce qui facilite leur fabrication.

Dans le ressort selon l'invention, les dimensions des proéminences doivent être telles que la tension de compression dans l'élastomère des blocs soit inférieure à la limite élastique de l'élastomère lorsque les plateaux intercalaires sont empilés les uns contre les autres avec interposition des proéminences. Les plateaux (spécialement leur zone qui déborde les blocs en élastomère) et leurs proéminences périphériques doivent en outre être dimensionnés pour que les blocs en élastomère puissent se déformer et enfler transversalement et librement lorsque les plateaux sont empilés comme exposé ci-dessus. En pratique, les dimensions des plateaux et des proéminences doivent être calculées dans chaque cas particulier par un homme du métier, en fonction de divers paramètres (notamment la nature de l'élastomère et les dimensions des blocs).

Dans le ressort selon l'invention, les plateaux peuvent être des disques. On peut également, en variante, mettre en oeuvre des plateaux polygonaux, par exemple rectangulaires ou carrés. Les plateaux peuvent être pourvus d'une proéminence unique qui forme une couronne annulaire ininterrompue sur la face proéminente du plateau. En variante, les plateaux portent plusieurs proéminences distinctes, qui sont réparties à la périphérie de la face proéminente du plateau. Les proéminences peuvent avoir toute section transversale compatible avec l'objectif recherché. Elles peuvent avoir une section transversale circulaire ou polygonale, par exemple carrée ou rectangulaire.

Comme il a été exposé plus haut, on préfère, selon l'invention, que les plateaux soient en métal. Dans cette forme de réalisation préférée de l'invention, les plateaux agissent comme des ailettes de refroidissement en participant activement à éliminer la chaleur qui est générée au sein de l'élastomère pendant les cycles de compression-détente du ressort. Ce ressort présente ainsi l'avantage d'être correctement réfrigéré en cours d'utilisation, ce qui écarte le risque d'un échauffement excessif de l'élastomère. Cette particularité avantageuse du ressort selon l'invention a pour corollaire que le ressort peut soutenir des fréquences élevées de cycles de compression-détente de grande amplitude, sans être sujet à un échauffement excessif. Toutes autres choses égales par ailleurs, l'intensité du refroidissement des blocs en élastomère va dépendre des dimensions des plateaux, principalement de la superficie de leur zone qui déborde lesdits blocs. La superficie optimum va dépendre de divers paramètres, notamment des dimensions des blocs, de la conductibilité thermique du métal des panneaux et des efforts auxquels le ressort est normalement soumis au cours d'une utilisation normale. Elle peut être déterminée par un homme du métier au moyen d'un calcul de routine. En pratique, on préfère que le rapport entre la superficie de la partie débordante des panneaux et la superficie de leur partie non débordante soit au moins égale à 1/3, de préférence à 1/2, les valeurs comprises entre 1/2 et 3/2 étant spécialement recommandées.

Dans une autre forme de réalisation préférée du ressort selon l'invention, l'élastomère des blocs est un élastomère thermoplastique qui a subi successivement une déformation par compression au-delà de la limite élastique de l'élastomère et une détente. Un élastomère thermoplastique est un élastomère qui conserve des propriétés élastiques après avoir subi une déformation rémanente par fluage plastique sous l'action d'un effort de compression. Les propriétés élastiques à la compression, de l'élastomère thermoplastique qui a subi la déformation rémanente sont normalement différentes de celles de l'élastomère avant la déformation. Les élastomères thermoplastiques sont bien connus en technique et sont généralement des élastomères de synthèse. On utilise avantageusement des polyesters thermoplastiques. Des exemples de polyesters thermoplastiques convenant pour l'invention appartiennent à la famille des copolymères d'esters de polyéthers.
Des copolymères obtenus par transestérification d'un ester dérivé d'acide phtalique, d'un glycol à faible poids moléculaire et d'un polyéther glycol conviennent bien, notamment ceux commercialisés sous la marque HYTREL® (Du Pont). Des informations concernant ces copolymères sont notamment accessibles dans le document Polymer Engineering and Science, décembre 1974, Vol. 14, n°12, pages 848 à 852, ainsi que dans le document Encyclopedia of polymer Science and Technology, Suppl. Vol. II, Wiley & Son, New York, 1977, pages 484-509.
Les élastomères connus sous la marque ARNITEL® (DSM) conviennent spécialement bien.
Dans cette forme de réalisation préférée de l'invention, les blocs en élastomère thermoplastique ont subi un traitement mécanique approprié, comprenant une déformation par compression au delà de la limite élastique de l'élastomère thermoplastique, la compression étant suivie d'une détente du bloc. Dans la suite du présent mémoire, le traitement mécanique qui vient d'être décrit sera désigné « traitement mécanique de compression/détente » et l'expression « axe de compression » désignera la direction de l'effort de compression mis en oeuvre dans le traitement mécanique de compression/détente.
A l'issue du traitement mécanique de compression/détente, les blocs en élastomère thermoplastique conservent une déformation rémanente, qui dépend de la grandeur de l'effort de compression et de l'élastomère thermoplastique sélectionné.
Dans le traitement mécanique de compression/détente, l'effort de compression doit être supérieur à la limite élastique de l'élastomère thermoplastique, de manière que les blocs du ressort conservent une déformation rémanente. La grandeur optimum de l'effort de compression va dépendre de la forme et des dimensions du bloc, ainsi que de l'élastomère thermoplastique et des propriétés recherchées pour le ressort. Elle doit être déterminée dans chaque cas particulier par l'homme du métier. Des informations concernant le traitement mécanique de compression/détente sont accessibles dans les documents US-A-4 198 037, GB-A-2 180 618 et WO 98/46930. Bien que cela ne soit pas indispensable, le traitement mécanique de compression/détente peut être accompagné d'un traitement thermique approprié avant, pendant ou après avoir exercé l'effort de compression. Des informations concernant ce traitement thermique sont accessibles dans le document US-A-4 198 037.
L'axe de compression est généralement rectiligne. Dans le cas où les blocs en élastomère sont des cylindres droits, l'axe de compression est de préférence parallèle à l'axe de révolution du bloc. Sous l'action de l'effort de compression (qui doit être au moins suffisant pour provoquer une déformation rémanente du cylindre) le cylindre subit une contraction axiale et une expansion radiale. A l'issue de la détente (qui consiste à relâcher l'effort de compression), le cylindre adopte une forme intermédiaire entre celle qu'il avait avant d'exercer l'effort de compression et celle qu'il avait à l'état comprimé. Les blocs cylindriques sont généralement des blocs circulaires et leur face latérale périphérique présente généralement un profil bombé convexe. Ce profil bombé convexe est le résultat du traitement mécanique de compression/détente exposé plus haut.
Le cylindre formant chacun des blocs du ressort peut être un cylindre unitaire ou un cylindre composite que l'on obtient en enchâssant un noyau cylindrique en élastomère thermoplastique, dans un fourreau en élastomère thermoplastique. Dans cette variante d'exécution particulière de l'invention, le fourreau et le noyau peuvent être réalisés dans le même élastomère thermoplastique ou en des élastomères thermoplastiques différents. Des blocs ressorts de ce type sont notamment décrits dans les documents WO 98/46930 et WO 2006/021357.

Dans une forme de réalisation particulière du ressort selon l'invention, l'assemblage composite des blocs et des plateaux est tubulaire. Il comprend de ce fait un conduit axial défini par un alignement d'ouvertures qui sont ménagées respectivement à travers les blocs et les panneaux. Un barreau cylindrique rigide traverse ce conduit axial. Le barreau cylindrique a pour fonction de rigidifier l'assemblage composite latéralement, pour éviter un flambage de celui-ci sous l'effet d'une compression axiale. Il peut en outre servir à assurer la cohésion de l'assemblage composite des blocs et des plateaux. Le barreau peut être en métal ou en toute autre matière rigide adéquate. Le métal est préféré. Le barreau présente normalement une section transversale qui correspond sensiblement à celle du conduit qu'il traverse, de manière que les blocs et les plateaux puissent coulisser librement à son contact lorsque le ressort est soumis à un cycle de compression-détente. En variante, on peut prévoir un lubrifiant entre le barreau et l'assemblage des blocs et des plateaux. Cette forme de réalisation particulière de l'invention est spécialement adaptée à des ressorts de grande longueur comprenant un nombre élevé de blocs en élastomère.
Dans la réalisation habituelle où l'assemblage composite des blocs et des plateaux est pris en sandwich entre deux supports d'extrémité, le barreau cylindrique coulisse généralement dans deux ouvertures qui sont ménagées respectivement dans ces deux supports. Ces deux ouvertures sont avantageusement munies de coussinets en une matière antifriction. Cette forme de réalisation de l'invention est avantageusement associée à celle dans laquelle un des intercalaires comprend une paire de plateaux, qui sont accolés sur leurs faces planes respectives. Dans un tel ressort, le barreau peut être solidarisé (par exemple soudé) à la paire de plateaux accolés et celle-ci occupe alors, de préférence, une position sensiblement médiane dans l'assemblage composite. On entend désigner par l'expression « position sensiblement médiane » une position qui se situe sensiblement à mi-distance des extrémités de l'assemblage composite. Dans le cas où le nombre n de blocs est un nombre pair, la position est strictement médiane et divise l'assemblage en deux fractions comprenant chacune n/2 blocs en élastomères et (n-2)/2 plateaux. Dans le cas où le nombre n de blocs est un nombre impair, la position est approximativement médiane et divise l'assemblage en deux fractions dont l'une comprend (n-1)/2 blocs en élastomère et l'autre (n+1)/2 blocs en élastomère. Dans le cas de grands assemblages comprenant un nombre élevé de blocs en élastomère et de plateaux, la position médiane précitée peut être décalée par rapport à la position strictement médiane de l'assemblage.

Dans les formes de réalisation qui viennent d'être décrites, le barreau assure l'alignement de l'empilage des intercalaires indéformables et des blocs en élastomère.

Dans une forme de réalisation supplémentaire du ressort selon l'invention, l'assemblage composite des blocs et des intercalaires est logé dans un boîtier et celui-ci est profilé de telle sorte qu'un au moins des plateaux intercalaires coulisse sur la paroi latérale du boîtier. Cette forme de réalisation de l'invention présente l'avantage de renforcer la résistance du ressort au flambage. Le boîtier et les plateaux intercalaires sont de préférence profilés et dimensionnés de telle sorte qu'une majorité (de préférence la totalité) des plateaux de l'assemblage composite coulissent sur la paroi latérale du boîtier.

Comparé au ressort de l'art antérieur, décrit dans le document WO-2010/012049-A1, le ressort selon l'invention présente l'avantage d'une conception plus simple. La géométrie des intercalaires est plus simple, l'assemblage du ressort est simplifié et la marge de tolérance dans le dimensionnement des proéminences (spécialement leur épaisseur) est doublée par rapport à ce qu'elle était dans le ressort antérieur du document WO-2010/012049-A1.

Le ressort selon l'invention est utilisable dans toutes applications nécessitant des ressorts de compression.

Le ressort selon l'invention trouve une application intéressante dans des tampons ou butoirs destinés aux véhicules ferroviaires, tels que les locomotives et les autorails, les voitures de chemin de fer pour voyageurs et les wagons ferroviaires pour le transport de marchandises ou de bestiaux.
Le ressort selon l'invention trouve une application supplémentaire dans des systèmes de suspension de véhicules terrestres à roues ou à chaînes, tels que des voitures automobiles, des camions, des motocyclettes, des chariots ou des remorques, des engins de génie civil ou militaire et des voitures de chemin de fer. On lui trouve également des applications dans des machines industrielles fixes, par exemple des machines-outils, ainsi que pour la suspension d'organes mécaniques mobiles dans du matériel électroménager (lave-linge, lave-vaisselle, etc.).

Des particularités et détails de l'invention vont apparaître au cours de la description suivante des figures annexées, qui sont des schémas de quelques formes de réalisation particulières de l'invention.

### Brève description des figures

La figure 1 montre en section axiale, une forme de réalisation préférée du ressort selon l'invention ;
La figure 2 est une vue en plan d'un plateau d'un intercalaire du ressort de la figure 1 ;
La figure 3 montre les trois projections (en plan, frontale et de profil) d'une forme de réalisation modifiée du plateau du ressort selon l'invention ; et
La figure 4 montre une variante de réalisation du ressort selon l'invention.
Les figures ne sont pas dessinées à l'échelle.

Généralement, les mêmes numéros de référence désignent les mêmes éléments.

### Description détaillée de modes de réalisation particuliers

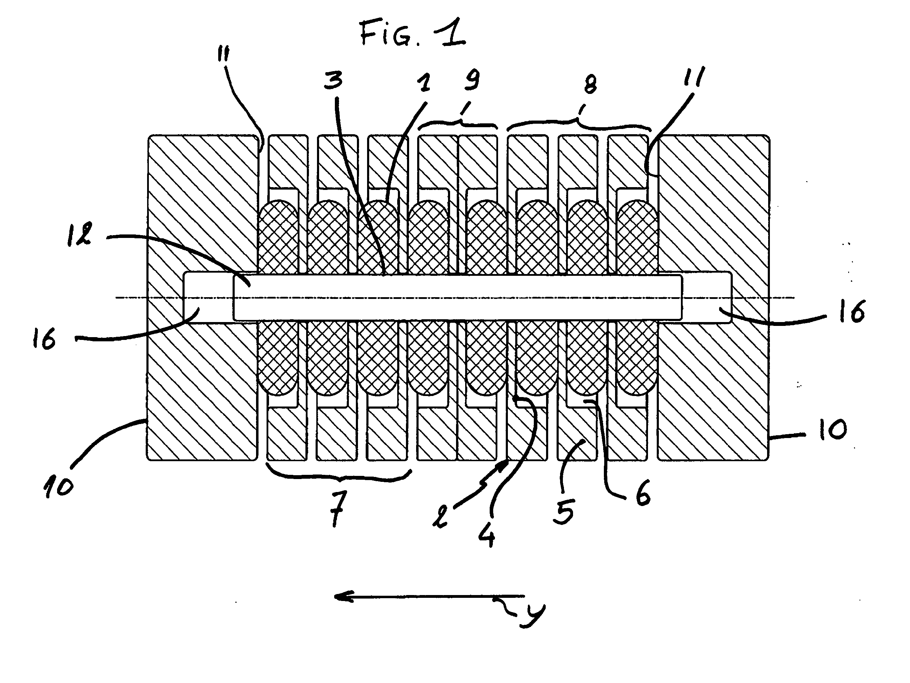

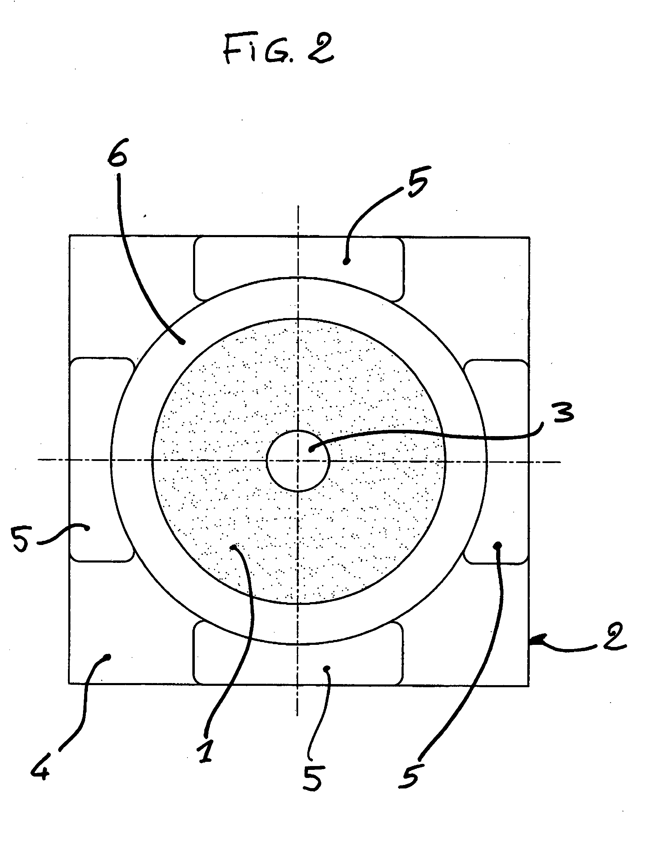

Le ressort représenté aux figures 1 et 2 comprend un assemblage composite de blocs tubulaires 1 en élastomère thermoplastique, alternant avec des intercalaires métalliques 2. Les blocs 1 présentent l'aspect de boudins, dont la face latérale périphérique présente un profil bombé convexe. Chacun des blocs tubulaires 1 a été obtenu en soumettant un tube cylindrique droit à un traitement mécanique de compression/détente comprenant une compression du tube cylindrique au-delà de la limite de déformation élastique de l'élastomère et une détente.
A l'issue du traitement mécanique de compression/détente, le tube cylindrique conserve une déformation rémanente lui donnant l'aspect des blocs 1.

Les blocs 1 et les intercalaires 2 sont percés en leur centre pour former un conduit axial 3 à travers l'assemblage composite.

Les intercalaires 2 comprennent un plateau carré plan 4 qui déborde les blocs 1. Dans sa zone périphérique qui déborde les blocs 1, chaque plateau 4 porte quatre proéminences 5. Ces proéminences 5 sont situées sur une seule face du plateau, dont l'autre face est entièrement plane. La face portant les proéminences 5 est désignée « face proéminente » dans le présent mémoire. L'autre face (qui ne porte pas de proéminences) est désignée « face plane ». Les proéminences 5 forment des encorbellements à la périphérie des blocs 1. Un écart substantiel 6 est maintenu entre les proéminences 5 et la surface périphérique des blocs 1. La fonction de cet écart 6 sera explicitée plus loin.

Dans le ressort de la figure 1, les intercalaires 2 sont répartis en trois séries d'intercalaires. Dans une première série, désignée dans son ensemble par la notation de référence 7, les plateaux 3 sont positionnés de telle sorte que leur face proéminente soit dirigée dans le sens de la flèche Y. Dans une seconde série d'intercalaires, désignée 8, les plateaux 3 sont positionnés de façon que leur face proéminente soit dirigée dans le sens inverse de celui de la flèche Y. Ces deux séries d'intercalaires sont séparées par un intercalaire médian 9, formé d'un couple de plateaux 4 accolés sur leur face plane.

L'ensemble des intercalaires 2, de l'intercalaire médian 9 et des blocs 1 est pris en sandwich entre deux supports d'extrémité 10 dont une face 11 est accolée à un bloc 1. La face 11 des supports 10 est essentiellement plane. Un barreau métallique 12 traverse le conduit axial précité et pénètre dans une ouverture 16 des supports d'extrémité 10. Le barreau 12 sert à assurer la cohésion de l'assemblage composite des blocs 1 et des plateaux 4. Il a pour fonction supplémentaire d'éviter un flambage de l'assemblage composite lorsque le ressort est comprimé entre les supports 10.

Dans le ressort de la figure 1, le barreau 12 traverse librement l'ensemble des plateaux 4. Dans une variante de réalisation, le barreau est soudé aux plateaux 4 de l'intercalaire médian 3.

Les ouvertures 16 des supports 10 peuvent avantageusement contenir des coussinets (non représentés) en une matière antifriction pour faciliter le coulissement du barreau 12 pendant une utilisation normale du ressort.

Pendant le fonctionnement normal du ressort, les blocs 1 subissent des cycles de compression/détente. Les proéminences 5 limitent la compression axiale de blocs 1. L'épaisseur des proéminences 5 est calculée pour que la tension de compression dans les blocs 1 soit inférieure à la limite élastique de l'élastomère lorsque l'assemblage composite est complètement comprimé, à fond de course des proéminences 5. Lorsque les blocs 1 sont dans une phase de compression, ils enflent transversalement. L'écart 6 entre les blocs et les proéminences 5 a pour fonction de permettre aux blocs d'enfler et se déformer librement.

Les cycles de compression/détente des blocs élastiques génèrent de la chaleur. Cette chaleur est évacuée par les plaques 4 et les proéminences 5 qui jouent le rôle d'ailettes de refroidissement et évitent un échauffement excessif du ressort.

Dans le ressort des figures 1 et 2, les plateaux carrés 2 peuvent, en variante, être remplacés par des disques circulaires ou elliptiques ou par des plaques polygonales, par exemple hexagonales ou octogonales.
Les quatre proéminences 5 des plateaux 4 peuvent être remplacées par une proéminence annulaire unique, à la périphérie du plateau.

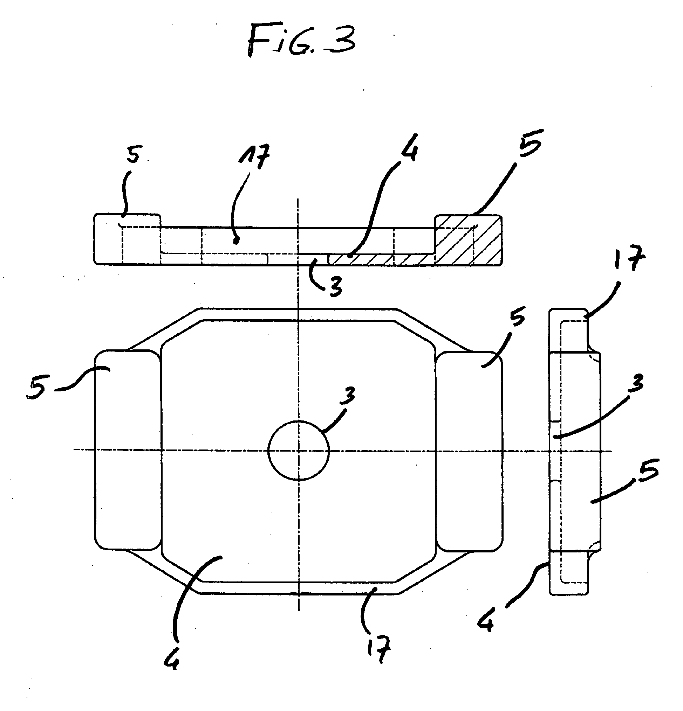

Dans sa forme de réalisation de la figure 3, le plateau 4 est octogonal et sa face proéminente porte deux proéminences épaisses 5 le long de deux arêtes opposées. Le long des six autres arêtes, le plateau porte sur sa face proéminente, une nervure 17 dont la hauteur est inférieure à celle des proéminences 5. La nervure 17 sert à rigidifier le plateau. Elle ne participe pas à limiter la compression axiale des blocs 1.

Dans un ressort équipé de plateaux intercalaires conformes à la figure 3, on oriente les plateaux de manière que leurs proéminences 5 soient alignées.

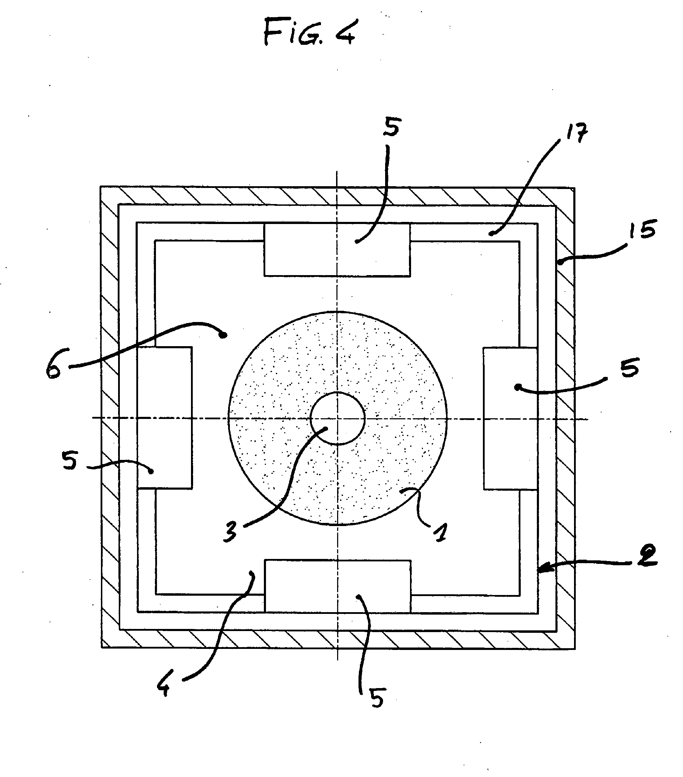

Dans la variante d'exécution de la figure 4, l'assemblage composite des blocs 1 et des plateaux 4 de la figure 1 est enfermé dans un boîtier 15 de section carrée ou rectangulaire.

## Revendications

1. Ressort de compression comprenant un assemblage composite de blocs cylindriques (1) en élastomère compressible élastiquement et d'intercalaires indéformables (2), qui sont pris en sandwich entre les blocs et débordent ceux-ci, lesdits intercalaires présentant, dans leur zone qui débordent les blocs, des proéminences (5) qui, à fond de course limitent la compression des blocs, **caractérisé en ce que** les intercalaires (2) comprennent des plateaux sensiblement plans (4), dont une seule face porte les proéminences précitées.

2. Ressort selon la revendication 1, **caractérisé en ce que**, pour chaque ensemble associant un bloc en élastomère (1) entre deux plateaux (4), les proéminences (5) d'un des plateaux sont dirigées vers la face de l'autre plateau, qui ne porte pas de proéminences.

3. Ressort selon la revendication 1 ou 2, **caractérisé en ce que** l'assemblage composite est pris en sandwich entre deux supports d'extrémité (10).

4. Ressort selon la revendication 3, **caractérisé en ce qu'**au moins un des supports d'extrémité (10) présente une face essentiellement plane, qui fait face aux proéminences (5) d'un plateau (4), avec interposition d'un bloc en élastomère (1).

5. Ressort selon l'une quelconque des revendications 1 à 4, **caractérisé en ce qu'**un barreau cylindrique (12) coulisse à travers un alignement d'ouvertures (3) qui sont ménagées à travers les blocs (1) et les plateaux (4).

6. Ressort selon l'une quelconque des revendications 1 à 5, **caractérisé en ce qu'**au moins un des intercalaires (2) comprend une paire de plateaux plans (4), qui sont accolés sur une face et portent les proéminences précitées (5) sur l'autre face.

7. Ressort selon la revendication 6, **caractérisé en ce que**, dans le cas où l'assemblage composite est pris en sandwich entre deux supports d'extrémité (10), chaque support d'extrémité (10) a une face essentiellement plane, en contact avec un bloc (1).

8. Ressort selon la revendication 6 ou 7, **caractérisé en ce que**, dans le cas où un barreau cylindrique (12) coulisse à travers les plateaux (4), ledit barreau est solidarisé à la paire de plateaux accolés.

9. Ressort selon l'une quelconque des revendications 6 à 8, **caractérisé en ce que** la paire de plateaux accolés (4) occupe une position sensiblement médiane dans l'assemblage composite.

10. Ressort selon l'une quelconque des revendications 1 à 9, **caractérisé en ce que** les proéminences (5) sont dimensionnées pour que la tension de compression dans l'élastomère des blocs (1) soit inférieure à sa limite élastique lorsque l'assemblage est comprimé jusqu'à pousser les proéminences (5) contre les plateaux (4).

11. Ressort selon l'une quelconque des revendications 1 à 10, **caractérisé en ce que** les blocs (1) sont circulaires et les plateaux (4) sont polygonaux.

12. Ressort selon la revendication 11, **caractérisé en ce que** les proéminences sont uniformément réparties à la périphérie des plateaux.

13. Ressort selon la revendication 12, **caractérisé en ce que** les plateaux sont orientés de telle sorte que leurs proéminences respectives soient alignées.

14. Ressort selon la revendication 12 ou 13, **caractérisé en ce que** les plateaux comprennent une nervure périphérique entre les proéminences.

15. Ressort selon l'une quelconque des revendications 1 à 14, **caractérisé en ce que** l'élastomère des blocs (1) est un élastomère thermoplastique qui a subi successivement une déformation par compression au-delà de la limite élastique de l'élastomère et une détente.

## Patentansprüche

1. Druckfeder bestehend aus einer Zusammensetzung von zylindrischen Blöcken (1) aus elastisch druckbaren Elastomerwerkstoff und unverformbaren Zwischenscheiben (2), die zwischen den Blöcken als Sandwich gehalten sind, und diese überschreiten, die oberganannte Zwischenscheiben darstellend, in ihrem Teil, der die Blöcke überschreitet, Vorsprungen (5), die bei vollem Hub der Feder, den Druck der Blöcken begrenzt, **dadurch gekennzeichnet, dass** die Zwischenscheiben (2) aus grundsätzlich flache Platten (4) bestehen, dessen eine einzige Seite die obengenannten Vorsprungen darstellen.

2. Feder gemäss Anspruch 1, **dadurch gekennzeichnet, dass** für jede Zusammensetzung eines Blöckes aus Elastomerwerkstoff (1) zwischen zwei Platten (4), die Vorsprungen (5) von einer der Platten in Richtung der Seite der anderen Platte, die keine Vorsprungen darstellt, gerichtet sind.

3. Feder gemäss Anspruch 1 oder 2, **dadurch gekennzeichnet, dass** die Zusammensetzung zwischen zwei Endstützen (10) als Sandwich gehalten ist.

4. Feder gemäss Anspruch 3, **dadurch gekennzeichnet, dass** mindestens einer der beiden Endstützen (10), eine gegenüber den Vorsprungen (5) einer Platte (4), mit Zwischenschaltung eines Elastomer Blöckes, eine grundsätzlich flache Seite darstellt.

5. Feder nach irgendeinem der Ansprüchen 1 bis 4, **dadurch gekennzeichnet, dass** ein zylindricher Stab (12) durch einer Reihe von Öffnungen (3), die durch den Blöcken und Platten (4) verfertigt sind, gleitet.

6. Feder nach irgendeinem der Ansprüchen 1 bis 5, **dadurch gekennzeichnet, dass** mindestens eine der Zwischenscheiben (2) aus ein Paar flache Platten (4), die sich bei einer Seite unterstützen und die vorgenannten Vorsprungen (5) auf der anderen Seite enthalten, besteht.

7. Feder gemäss Anspruch 6, **dadurch gekennzeichnet, dass** falls die Zusammensetzung zwischen zwei Endstütze (10) als Sandwich gehalten ist, jeder Endstutz (10) besitzt eine grundsätzlich flache Seite in Berührung mit einem Block (1).

8. Feder gemäss Anspruch 6 oder 7, **dadurch gekennzeichnet, dass** falls ein zylindrischer Stab (12) durch die Platten (4) gleitet, dieser Stab ist an dem Paar von Platten, die sich gegen einander unterstützen, befestigt.

9. Feder nach irgendeinem der Ansprüchen 6 bis 8, **dadurch gekennzeichnet, dass** das Paar von Platten (4), die sich gegen einander unterstützen, eine grundsätzlich mittlere Lage in der Zusammensetzung besetzt.

10. Feder nach irgendeinem der Ansprüchen 1 bis 9, **dadurch gekennzeichnet, dass** die Vorsprungen so dimensioniert sind, dass die Druckspannung in dem Elastomerwerkstoff der Blöcken (1) sei niedriger als seine elastische Grenze wenn die Zusammensetzung so zusammengepresst ist, dass die Vorsprungen (5) gegen die Platten (4) gedrückt sind.

11. Feder nach irgendeinem der Ansprüchen 1 bis 10, **dadurch gekennzeichnet, dass** die Blöcke (1) rund und die Platten (4) polygonal sind.

12. Feder gemäss Anspruch 11, **dadurch gekennzeichnet, dass** die Vorsprungen einförmisch am Rand der Platten verteilt sind.

13. Ferder gemäss Anspruch 12, **dadurch gekennzeichnet, dass** die Platten augerichtet sind, dass ihren jeweiligen Vorsprungen ausgerichtet sind.

14. Feder gemäss Anspruch 12 oder 13, **dadurch gekennzeichnet, dass** die Platten eine Umfangsrippe zwischen den Vorsprungen enthalten.

15. Feder nach irgendeinem der Ansprüchen 1 bis 14, dadurch gekennzeichent, dass das Elastomerwerkstoff der Blöcken (1) ein thermoplastisches Elastomer ist, dass einanderfolgend eine Druckverformung über die elastische Grenze des Elastomerwerkstoffes und eine Entspannung ertragen hat.

## Claims

1. A compression spring comprising a composite assembly of cylindrical blocks made of elastomeric material (1) elastically compressible and non-deformable inserts (2), that are sandwiched between the blocks and overfill them, the named inserts showing, in the overfilling area, prominences (5) that, at full stroke, limit the blocks compression, **characterised in** the fact that the inserts (2) comprise significantly flat plates (4), where only one side shows the said prominences.

2. The spring as set forth in claim 1, wherein for each set combining one elastomeric block (1) between two plates (4), the prominences (5) of one of the two plates are oriented towards the side of the other plate that does not have prominences.

3. The spring as set forth in claim 1 or 2, wherein the composite assembly is sandwiched between two support ends (10).

4. The spring as set forth in claim 3, wherein at least one of the support ends (10) shows a side mainly flat, in front of the prominences (5) of one plate (4), with interposition of one elastomeric block (1).

5. The spring as set forth in any claim 1 to 4, wherein a cylindrical bar (12) is sliding through a holes alignment (3) that are executed in the blocks (1) and the plates (4).

6. The spring as set forth in any claim 1 to 5, wherein at least one of the inserts (2) comprises one pair of plane plates (4), which are appended on one side and have the said prominences (5) on the other side.

7. The spring as set forth in claim 6, wherein, in the case where the composite assembly is sandwiched between two support ends (10), each support end (10) has a side mainly flat, in contact with a block (1).

8. The spring as set forth in claim 6 or 7, wherein a sliding cylindrical bar (12) is sliding through the plates (4), and the said bar is fixed with the appended plates pair.

9. The spring as set forth in any claim 6 to 8, wherein the fixed plates pair (4) is located in a significantly median position within the composite assembly.

10. The spring as set forth in any claim 1 to 9, wherein the prominences (5) are sized to keep the elastomeric blocks compression stress inferior to the elastic limit when the assembly is compressed to have the prominences (5) in contact with the plates (4).

11. The spring as set forth in any claim 1 to 10, wherein the blocks (1) are circular and the plates (4) are polygonal.

12. The spring as set forth in claim 11, wherein the prominences are uniformly distributed at the edge of the plates.

13. The spring as set forth in claim 12, wherein the plates are oriented so that their respective prominences are aligned.

14. The spring as set forth in claim 12 or 13, wherein the plates comprise a peripheral rib between the prominences.

15. The spring as set forth in any claim 1 to 14, wherein the blocks (1) elastomer is a thermoplastic elastomer that has successively underwent a deformation by a compression over the elastic limit of the elastomer and a release.
